# EUROPÄISCHE PATENTSCHRIFT

(11) **EP 3 371 609 B1**
(45) Veröffentlichungstag und Bekanntmachung des Hinweises auf die Patenterteilung: **30.06.2021**
(21) Anmeldenummer: 16797814.7
(22) Anmeldetag: 10.11.2016
(51) Int. Cl.: G01P 21/02, G01P 3/48, B65H 26/00, B65H 23/18, H02P 29/00, H02H 7/093, H02P 29/10, B65H 23/192

(54) **FEHLERSICHERE GESCHWINDIGKEITSÜBERWACHUNG EINES ANTRIEBS**
FAIL-SAFE SPEED MONITORING OF A DRIVE
SURVEILLANCE DE LA VITESSE D'UN ENTRAINEMENT AVEC PROTECTION CONTRE LES ERREURS

(30) Priorität: 17.12.2015 EP 15200824
(43) Veröffentlichungstag der Anmeldung: 12.09.2018
(73) Patentinhaber: Siemens Energy Global GmbH & Co. KG, 81739 München (DE)
(72) Erfinder: CZERNY, Werner, 91315 Höchstadt (DE); MEINARDUS, Martin, 90480 Nürnberg (DE); RASENACK, Wolf-Martin, 91080 Marloffstein (DE); VLAIC, Iuliu, 90766 Fürth (DE)
(86) Internationale Anmeldenummer: PCT/EP2016/077273
(87) Internationale Veröffentlichungsnummer: WO 2017/102189

(56) Entgegenhaltungen:
- DE-A1- 10 163 010
- DE-A1- 10 261 450
- DE-A1-102009 038 060
- DE-A1-102011 009 927
- DE-A1-102012 203 002
- DE-A1-102012 219 914

## Beschreibung

Die Erfindung betrifft ein Verfahren zur fehlersicheren Überwachung der Geschwindigkeit eines Antriebs mit zumindest einem Umrichter, einem Motor und einem Drehzahlgeber, wobei dem Antrieb eine Soll-Drehzahl vorgegeben wird und mittels des Drehzahlgebers eine Ist-Drehzahl erfasst wird. Die Erfindung betrifft weiter ein System aus zumindest einem Antrieb, der zumindest einen Umrichter, einen Motor und einen Drehzahlgeber aufweist, und Mittel zur Durchführung des genannten Verfahrens. Die Erfindung betrifft zudem die Verwendung des genannten Verfahrens zur mittelbaren Überwachung der Bahngeschwindigkeit einer durch Rollen bewegten Materialbahn in einer Papiermaschine, Rollenschneidmaschine oder Streichmaschine.

Ein derartiges Verfahren bzw. System kommt insbesondere dort zum Einsatz, wo eine Geschwindigkeitsüberwachung von Antrieben mit einem möglichst hohen Sicherheits-Integritätslevel (SIL, auch "Safety Integrity Level", Definition z.B. gemäß IEC/EN 62061) erfolgen soll. Die Verwendung des genannten Verfahrens kommt dabei insbesondere als Weiterentwicklung in Lösungen zum Einsatz, wie sie in der WO 2013/127815 A1 beschrieben sind.

Bekannte Lösungen zur fehlersicheren Geschwindigkeitsüberwachung verwenden hierfür spezielle Safety-Drehzahlgeber oder externe Hardware, Sinus-Cosinus-Geber und safetyzertifizierten Geberanbau. Diese Lösungen sind aber aufwändig und teuer.

So beschreibt beispielsweise die DE102012203002A1, wie die Drehzahl eines Motors bestimmt wird, welcher mit einer eine Materialbahn bewegenden Antriebsrolle gekoppelt ist. Die Drehzahl wird permanent auf ein vorhandenes Signalrauschen überwacht, bei dessen Fehlen die Maschine abgeschaltet wird. Ein Fehler wird auch erkannt, wenn die Differenz aus Sollund Ist-Geschwindigkeit länger als eine bestimmte Toleranzzeitdauer konstant bleibt.

Die DE102012219914A1 offenbart eine Überwachung von Antriebsmotoren. Dabei kann eine Ist-Drehzahl (entsprechend der Ersatzdrehzahl der vorliegenden Anmeldung) aus Strom- bzw. Spannungswerten bestimmt werden. Zusätzlich kann die Drehzahl auch mit Hilfe von Rotorpositionssensoren ermittelt werden. Ein Fehler wird erkannt, wenn die Differenz zwischen Ist-Drehzahl und Soll-Drehzahl einen erlaubten Schwellwert überschreitet. Auch ein Vergleich, der aus elektrischen Parametern ermittelten Drehzahl mit der von den Positionssensoren bestimmten Drehzahl, wird vorgeschlagen.

Die DE102011009927A1 beschreibt ebenfalls eine Überwachung von Antriebsmotoren. Vorgeschlagen wird eine Soll-Drehzahl mit zwei aus elektrischen Motorparametern ermittelten Geschwindigkeitswerten zu vergleichen.

Die DE10163010A1 offenbart ein System mit zwei Prozessoren, welche auf unterschiedliche Weise jeweils eine Geschwindigkeit ermitteln und ihre Ergebnisse kreuzweise vergleichen.

Der Erfindung liegt die Aufgabe zugrunde, eine Lösung zur fehlersicheren Überwachung der Geschwindigkeit eines Antriebs vorzuschlagen, die die Nachteile der bekannten Lösungen überwindet.

Diese Aufgabe wird durch ein Verfahren nach Anspruch 1 gelöst.

Das Verfahren kennzeichnet insbesondere, dass eine Ersatzdrehzahl berechnet wird und in einem Sicherheitsprogramm einer Sicherheits-CPU mit je zwei der drei Werte Soll-Drehzahl, Ist-Drehzahl und Ersatzdrehzahl drei verschiedene Plausibilitätsprüfungen durchgeführt werden.

Die Aufgabe wird weiter durch ein System mit den in Anspruch 4 sowie eine Verwendung des erfindungsgemäßen Verfahrens mit den in Anspruch 6 angegebenen Merkmalen gelöst.

Die erfindungsgemäße Lösung realisiert eine fehlersichere Geschwindigkeitsüberwachung durch ein Berechnungsverfahren in der Software unter Verwendung der bestehenden / herkömmlichen Hardware, d.h. es wird keine spezielle Hardware wie bei den bekannten Lösungen (Safety-Geber etc.) benötigt. Dabei berechnet sich die Ersatzdrehzahl aus der Ausgangsfrequenz des Umrichters bei Drehstromantrieben bzw. dem Quotienten aus EMK (elektromotorische Kraft bzw. Klemmenspannung) und magnetischem Fluss bei Gleichstromantrieben. Durch die drei Plausibilitätsprüfungen (Soll-Drehzahl - Ist-Drehzahl, Ist-Drehzahl - Ersatzdrehzahl, Ersatzdrehzahl - Soll-Drehzahl) können Sicherheitslevel erreicht werden, die bisher nur durch Hardware-Lösungen erreichbar waren.

Zudem können auch Geberfehler erkannt werden, die durch bisherige Hardware-Lösungen nicht bzw. nur schwer (über Fehlerausschlüsse) erkennbar sind. Denn bei einem Verfahren ohne die berechnete Ersatzdrehzahl können durch die regelungstechnische Rückkopplung von Soll- und Istwert (Istwert vom Geber erfasst) nicht sämtliche Geberfehler erkannt werden, die aber zur Erreichung einer fehlersicheren Geschwindigkeitsüberwachung erkannt werden müssen, z.B. konstanter Schlupf zwischen Geber und Geberwelle. Da die berechnete Ersatzdrehzahl unabhängig vom Geber ist, werden diese Fehler durch das erfindungsgemäße Verfahren ebenfalls erkannt.

Erfindungsgemäß wird bei den Plausibilitätsprüfungen jeweils zumindest das dritte der folgenden Kriterien überprüft:
- zumindest ein Wert ändert sich kontinuierlich,
- die Differenz beider Werte liegt innerhalb einer vorgebbaren Toleranz,
- die Differenz beider Werte ändert sich kontinuierlich.

Durch die Prüfung, ob ein Wert und/oder die Differenz beider Werte sich kontinuierlich ändert, wird geprüft, ob ein Rauschen auf dem Wert vorhanden ist, bzw. die Differenz beider Werte auf Rauschen geprüft. Liegt die Differenz beider Werte innerhalb einer vorgebbaren Toleranz, so decken sich beide Werte zumindest weitestgehend. Ist zumindest eines der überprüften Kriterien nicht erfüllt, d.h. es liegt kein Rauschen vor und/oder die jeweiligen Werte decken sich nicht, so ist die entsprechende Plausibilitätsprüfung negativ.

Erfindungsgemäß werden die Ist-Drehzahl und/oder die Ersatzdrehzahl im Sicherheitsprogramm auf Überschreiten zumindest eines vorgebbaren positiven Grenzwertes oder auf Unterschreiten zumindest eines vorgebbaren negativen Grenzwertes geprüft. Da die berechnete Ersatzdrehzahl unabhängig vom Geber ist, wird durch die Überprüfung der Ersatzdrehzahl auf Grenzwertüberschreitung die Sicherheit des Systems auch bei bestimmten Geberfehlern (z.B. konstanter Schlupf zwischen Geber und Geberwelle) gewährleistet.

In einer vorteilhaften Ausführungsform wird dabei bei Überschreiten bzw. Unterschreiten des positiven bzw. negativen Grenzwertes ein Warnsignal ausgegeben und/oder der Motor abgeschaltet. Die Ausgabe eines Warnsignals ermöglicht es einem Bediener, geeignete Maßnahmen zu ergreifen und ggf. auch den Motor manuell abzuschalten. Der Grenzwert kann aber auch so vorgegeben sein, dass eine sofortige Abschaltung des Motors zu bewirken ist.

In einer weiteren vorteilhaften Ausführungsform wird bei negativem Ergebnis zumindest einer Plausibilitätsprüfung ein Warnsignal ausgegeben und/oder der Motor abgeschaltet. Die Ausgabe eines Warnsignals ermöglicht es einem Bediener, geeignete Maßnahmen zu ergreifen und ggf. auch den Motor manuell abzuschalten. Der Grenzwert kann aber auch so vorgegeben sein, dass eine sofortige Abschaltung des Motors zu bewirken ist.

In einer vorteilhaften Form der Ausgestaltung des Systems weist der Umrichter Mittel zur Berechnung der Ersatzdrehzahl auf. Durch die Vornahme dieser einfachen Berechnung direkt im Umrichter anstatt in der Sicherheits-CPU wird die Einhaltung eines hohen Safety-Integrety-Levels nicht beeinflusst.

Das erfindungsgemäße Verfahren eignet sich insbesondere vorteilhaft zur mittelbaren Überwachung der Bahngeschwindigkeit einer durch Rollen bewegten Materialbahn in einer Papiermaschine, Rollenschneidmaschine oder Streichmaschine. Unter einer Materialbahn wird dabei eine Bahn aus einem Flachmaterial, beispielsweise aus Papier, Kunststoff oder Metall, verstanden.

Bei Maschinen mit durchlaufenden, durch Rollen bewegten Materialbahnen sind die Umfangsgeschwindigkeiten der antreibenden Rollen und die damit zusammenhängende Bahngeschwindigkeit der Materialbahnen zu überwachen. Insbesondere sind zwei Geschwindigkeitsschwellenwerte zu berücksichtigen: eine maximale mechanische Bahngeschwindigkeit, die nicht überschritten werden darf, um eine Beschädigung der Maschine zu vermeiden, und eine so genannte sichere Geschwindigkeit, bei der es den Bedienern erlaubt ist, Gefahrenbereiche während der Bewegung der Maschine zu betreten, beispielsweise um Wartungsarbeiten durchzuführen.

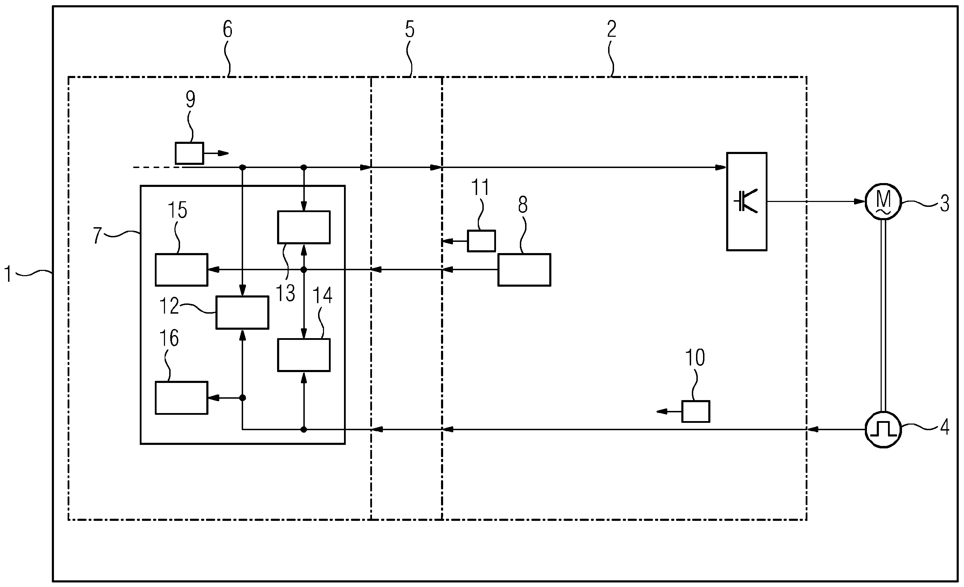

Im Folgenden wird die Erfindung anhand des in der Figur dargestellten Ausführungsbeispiels näher beschrieben und erläutert. Die Figur zeigt:
eine schematische Darstellung einer erfindungsgemäßen fehlersicheren Geschwindigkeitsüberwachung.

Die Figur zeigt ein System 1 aus einem Antrieb, der einen Umrichter 2, einen Motor 3 und einen Drehzahlgeber 4 aufweist, und einer Sicherheits-CPU 6 mit einem Sicherheitsprogramm 7. Umrichter 2 und Sicherheits-CPU 6 sind beispielhaft über einen Feldbus 5 als Kommunikationsverbindung gekoppelt. Im dargestellten Ausführungsbeispiel weist der Umrichter 2 selbst Mittel 8 zur Berechnung einer Ersatzdrehzahl 11 auf. Dabei berechnet sich die Ersatzdrehzahl 11 aus der Ausgangsfrequenz des Umrichters 2 bei Drehstromantrieben bzw. dem Quotienten aus EMK (elektromotorische Kraft bzw. Klemmenspannung) und magnetischem Fluss bei Gleichstromantrieben. Dem Umrichter 2 wird eine Soll-Drehzahl 9 vorgegeben, und der Drehzahlgeber 4 liefert eine Ist-Drehzahl 10 zurück.

Im Sicherheitsprogramm 7 der Sicherheits-CPU 6 werden nun je zwei dieser drei Drehzahl-Werte auf Plausibilität überprüft, d.h. es findet eine Plausibilitätsüberprüfung 12 zwischen Soll-Drehzahl 9 und Ist-Drehzahl 10, eine Plausibilitätsüberprüfung 13 zwischen Soll-Drehzahl 9 und Ersatzdrehzahl 11 und eine Plausibilitätsüberprüfung 14 zwischen Ersatzdrehzahl 11 und Ist-Drehzahl 10 statt. Bei jeder dieser drei Plausibilitätsüberprüfungen 12-14 wird vorteilhafterweise überprüft, ob mindestens einer der jeweiligen Werte sich kontinuierlich ändert, d.h. mit einem Rauschen belegt ist, ob die Differenz beider Werte sich in einem vorgebbaren Toleranzbereich bewegt, d.h. sich beide Werte zumindest im Wesentlichen decken (aber nicht dauerhaft exakt decken), und ob die Differenz beider Werte sich kontinuierlich ändert (also ebenfalls, ob ein Rauschen vorliegt). Sind alle drei Plausibilisierungen 12-14 positiv, wird die Drehzahl des Motors 3 als sicher angenommen.

Zusätzlich werden sowohl die Ist-Drehzahl 10 als auch die Ersatzdrehzahl 11 auf Überschreiten eines Grenzwertes überprüft 15, 16. Hierdurch wird die Sicherheit des Systems 1 auch bei bestimmten Geberfehlern (wie z.B. konstantem Schlupf zwischen Geber und Geberwelle) gewährleistet, die sonst nicht oder nur schwer (über Fehlerausschlüsse) festgestellt werden können.

Zusammenfassend betrifft die Erfindung eine fehlersichere Überwachung der Geschwindigkeit eines Antriebs mit zumindest einem Umrichter, einem Motor und einem Drehzahlgeber, wobei dem Antrieb eine Soll-Drehzahl vorgegeben wird und mittels des Drehzahlgebers eine Ist-Drehzahl erfasst wird. Um unter Vermeidung der Nachteile der bekannten Lösungen einen hohen Sicherheits-Integritätslevel zu erreichen, wird vorgeschlagen, dass eine Ersatzdrehzahl berechnet wird und in einem Sicherheitsprogramm einer Sicherheits-CPU mit je zwei der drei Werte Soll-Drehzahl, Ist-Drehzahl und Ersatzdrehzahl so wie im Anspruch 1 beansprucht drei verschiedene Arten von Plausibilitätsprüfungen durchgeführt werden. Da die berechnete Ersatzdrehzahl unabhängig vom Geber ist, können bei einer Überprüfung der Ersatzdrehzahl auch Geberfehler erkannt werden, die durch bisherige Hardware-Lösungen nicht bzw. nur schwer (über Fehlerausschlüsse) erkennbar sind.

## Patentansprüche

1. Verfahren zur fehlersicheren Überwachung der Geschwindigkeit eines Antriebs mit einer Rolle und zur mittelbaren Überwachung der Bahngeschwindigkeit einer durch Rollen bewegten Materialbahn, wobei der Antrieb zumindest einen Umrichter (2), einen Motor (3) und einen Drehzahlgeber (4) aufweist , wobei dem Antrieb eine Soll-Drehzahl (9) vorgegeben wird und mittels des Drehzahlgebers (4) eine Ist-Drehzahl (10) erfasst wird,
dadurchgekennzeichnet, dass
eine Ersatzdrehzahl (11) berechnet wird und in einem Sicherheitsprogramm (7) einer Sicherheits-CPU (6) mit je zwei der drei Werte Soll-Drehzahl (9), Ist-Drehzahl (10) und Ersatzdrehzahl (11) eine Plausibilitätsprüfung (12-14) durchgeführt wird, wobei die Ersatzdrehzahl (11) aus der Ausgangsfrequenz des Umrichters (2) bei Drehstromantrieben oder aus dem Quotienten aus Klemmspannung und magnetischem Fluss bei Gleichstromantrieben berechnet wird, wobei je zumindest eine Plausibilitätsprüfung (12, 13, 14)
- zwischen Soll-Drehzahl (9) und Ist-Drehzahl (10),
- zwischen Soll-Drehzahl (9) und Ersatzdrehzahl (11) und
- zwischen Ist-Drehzahl (10) und Ersatzdrehzahl (11) erfolgt, wobei bei den drei Plausibilitätsprüfungen (12-14) überprüft wird,
dass die Differenz beider Werte sich kontinuierlich ändert,
wobei auch ein Rauschen als kontinuierliche Änderung angezeigt wird, und wobei die Ist-Drehzahl (10) und/oder die Ersatzdrehzahl (11) im Sicherheitsprogramm (7) auf Überschreiten zumindest eines vorgebbaren positiven Grenzwertes oder auf Unterschreiten zumindest eines vorgebbaren negativen Grenzwertes geprüft werden (15, 16).

2. Verfahren nach Anspruch 1,
wobei bei Überschreiten bzw. Unterschreiten des positiven bzw. negativen Grenzwertes ein Warnsignal ausgegeben und/oder der Motor (3) abgeschaltet wird.

3. Verfahren nach einem der vorhergehenden Ansprüche,
wobei bei negativem Ergebnis zumindest einer Plausibilitätsprüfung (12-14) ein Warnsignal ausgegeben und/oder der Motor (3) abgeschaltet wird.

4. System (1) bestehend
aus zumindest einem Antrieb mit einer Rolle und einer durch Rollen bewegten Materialbahn, wobei der Antrieb zumindest einen Umrichter (2), einen Motor (3) und einen Drehzahlgeber (4) aufweist,
aus Mitteln zur Berechnung einer Ersatzdrehzahl, welche so ausgebildet sind, dass die Ersatzdrehzahl (11) aus der Ausgangsfrequenz des Umrichters (2) bei Drehstromantrieben oder aus dem Quotienten aus Klemmspannung und magnetischem Fluss bei Gleichstromantrieben berechnet wird, und
aus einer Sicherheits-CPU (6), wobei die Sicherheits-CPU (6) zumindest ein Sicherheitsprogramm (7) zur Durchführung eines Verfahrens nach einem der vorhergehenden Ansprüche aufweist.

5. System nach Anspruch 4, wobei der Umrichter (2) die Mittel (8) zur Berechnung der Ersatzdrehzahl (11) aufweist.

6. Verwendung des Verfahrens nach einem der Ansprüche 1 bis 3 zur mittelbaren Überwachung der Bahngeschwindigkeit einer durch Rollen bewegten Materialbahn in einer Papiermaschine, Rollenschneidmaschine oder Streichmaschine.

## Claims

1. Method for fail-safe monitoring of the speed of a drive having a roller and for the purpose of indirectly monitoring the web speed of a material web that is moved by rollers, where the drive has at least a converter (2), a motor (3) and a rotational speed sensor (4), wherein a target rotational speed (9) is specified to the drive and an actual rotational speed (10) is captured by the rotational speed sensor (4),
**characterised in that**
a substitute rotational speed (11) is calculated and a plausibility check (12-14) is performed in a safety program (7) of a safety CPU (6) using in each case two of the following three values: target rotational speed (9), actual rotational speed (10) and substitute rotational speed (11), wherein the substitute rotational speed (11) is calculated from the initial frequency of the converter (2) in the case of three-phase drives or from the quotient of terminal voltage and magnetic flux in the case of direct-current drives, wherein a plausibility check (12, 13, 14) takes place in each case
- between target rotational speed (9) and actual rotational speed (10),
- between target rotational speed (9) and substitute rotational speed (11), and
- between actual rotational speed (10) and substitute rotational speed (11),
wherein it is verified in the three plausibility checks (12-14) that the difference between both values changes continuously, wherein a noise is also indicated as a continuous change, and wherein the actual rotational speed (10) and/or the substitute rotational speed (11) are checked (15, 16) in the safety program (7) to determine whether they exceed at least one specified positive limit value, or do not reach at least one specified negative limit value.

2. Method according to claim 1,
wherein a warning signal is output and/or the motor (3) is switched off if the positive limit value is exceeded or if the negative limit value is not reached.

3. Method according to one of the preceding claims, wherein a warning signal is output and/or the motor (3) is switched off if at least one plausibility check (12-14) returns a negative result.

4. System (1) comprising
at least one drive having a roller and a material web that is moved by rollers, wherein the drive has at least a converter (2), a motor (3) and a rotational speed sensor (4),
means for calculating a substitute rotational speed which are embodied such that the substitute rotational speed (11) is calculated from the initial frequency of the converter (2) in the case of three-phase drives or from the quotient of terminal voltage and magnetic flux in the case of direct-current drives, and
a safety CPU (6), wherein the safety CPU (6) has at least a safety program (7) for performing a method according to one of the preceding claims.

5. System according to claim 4,
wherein the converter (2) has means (8) for calculating the substitute rotational speed (11).

6. Use of the method according to one of claims 1 to 3 for indirectly monitoring the web speed of a material web which is moved by rollers in a paper machine, reel slitter or coater.

## Revendications

1. Procédé de contrôle, sécurisé vis-à-vis d'une erreur, de la vitesse d'un entraînement ayant un rouleau et de contrôle direct de la vitesse d'une bande de matière mise en mouvement par des rouleaux, l'entraînement ayant au moins un onduleur (2), un moteur (3) et un indicateur (4) de vitesse de rotation, dans lequel on prescrit une vitesse (9) de rotation de consigne à l'entraînement et on relève une vitesse (10) de rotation réelle au moyen de l'indicateur (4) de vitesse de rotation,
**caractérisé en ce que** l'on calcule une vitesse (11) de rotation de remplacement et on effectue un contrôle (12 à 14) de vraisemblance dans un programme (7) de sécurité d'une CPU (6) de sécurité par respectivement deux des trois valeurs, vitesse (9) de rotation de consigne, vitesse (10) de rotation réelle et vitesse (11) de rotation de remplacement, dans lequel on calcule la vitesse (11) de rotation de remplacement à partir de la fréquence de sortie de l'onduleur (2) pour des entraînements à courant triphasé ou à partir du quotient de la tension aux bornes et du flux magnétique pour des entraînements à courant continu, dans lequel il est produit respectivement au moins un contrôle (12, 13, 14) de vraisemblance
- entre la vitesse (9) de rotation de consigne et la vitesse (10) de rotation réelle,
- entre la vitesse (9) de rotation de consigne et la vitesse (11) de rotation de remplacement,
- entre la vitesse (10) de rotation réelle et la vitesse (11) de rotation de remplacement
dans lequel, dans les trois contrôles (12 à 14) de vraisemblance, on contrôle que la différence des deux valeurs se modifie continuellement,
dans lesquels on indique également un bruit sous la forme d'une variation continue et
dans lequel on contrôle la vitesse (10) de rotation réelle et/ou la vitesse (11) de rotation de remplacement dans le programme (17) de sécurité sur le point de savoir si l'on passe au-dessus d'une valeur limite positive pouvant être donnée à l'avance ou si l'on passe au-dessous d'au moins une valeur limite négative pouvant être donnée à l'avance (15, 16)

2. Procédé suivant la revendication 1,
dans lequel, si l'on passe au-dessus ou en-dessous de la valeur limite positive ou négative, on émet un signal d'alerte et/ou on arrête le moteur (3).

3. Procédé suivant l'une des revendications précédentes, dans lequel, dans le cas d'un résultat négatif d'au moins un contrôle (12 à 14) de vraisemblance, on émet un signal d'alerte et/ou on arrête le moteur.

4. Système (1) consistant
en au moins un entraînement ayant un rouleau et une bande de matière mise en mouvement par des rouleaux, dans lequel l'entraînement a au moins un onduleur (2), un moteur (3) et un indicateur (4) de vitesse de rotation
en des moyens de calcul d'une vitesse de rotation de remplacement, qui sont constituées de manière à calculer la vitesse (11) de rotation de remplacement à partir de la fréquence de sortie de l'onduleur pour des entraînements à courant triphasé ou à partir du quotient de la tension aux bornes par le flux magnétique pour des entraînements à courant continu et
en une CPU (6) de sécurité, la CPU (6) de sécurité ayant au moins un programme (7) de sécurité pour effectuer un procédé suivant l'une des revendications précédentes.

5. Système (1) suivant la revendication 4,
dans lequel l'onduleur (2) a les moyens (8) de calcul de la vitesse (11) de rotation de remplacement.

6. Utilisation du procédé suivant l'une des revendications 1 à 3, pour le contrôle indirect de la vitesse d'une bande de matière mise en déplacement par des rouleaux dans une machine à papier, une refendeuse ou une machine coucheuse.
